# EUROPEAN PATENT SPECIFICATION

(11) **EP 1 853 003 B1**
(45) Date of publication and mention of the grant of the patent: **02.02.2011**
(21) Application number: 06300424.6
(22) Date of filing: 02.05.2006
(51) Int. Cl.: H04L 12/26, H04L 12/24

(54) **System and method for monitoring a data network segment**
System und Verfahren zur Überwachung eines Datennetzwerksegments
Système et méthode pour surveiller un segment de réseau informatique

(43) Date of publication of application: 07.11.2007
(73) Proprietor: Acterna France, 42000 Saint Etienne (FR)
(72) Inventor: Le Foll, Dominique, Ivybridge PL21 9XA (GB); Schmitt, Jean, 28260 Rouvres (FR)
(74) Representative: Moudni, Houssine

(56) References cited:
- WO-A2-03/028291
- US-A- 5 450 408
- US-B1- 6 560 648
- YASUDA Y ET AL: "AUTOMATED NETWORK CONNECTION TRACING AND DATA GATHERING METHODS IN THE SDH NETWORK" IEEE TRANSACTIONS ON COMMUNICATIONS, IEEE SERVICE CENTER, PISCATAWAY, NJ, US, vol. 42, no. 2/3/4, 1 February 1994 (1994-02-01), pages 1065-1075, XP000447371 ISSN: 0090-6778

## Description

### TECHNICAL FIELD

The present invention relates generally to monitoring of data communication networks, and particularly to performing connectivity checks and route tracing in Ethernet based networks built around VLAN switching.

### BACKGROUND TO THE INVENTION

Data communication networks are comprised, in general, of a patchwork of diverse network segments (e.g., metro access networks and core networks using a variety of technologies) that may belong to different organizations. Typically the core nodes are fully meshed, whereas the metro nodes, outnumbering the core nodes by one order of magnitude, are highly redundant with at least 2-3 links between each metro node and the core, thereby affording some network redundancy. Each network segment generally includes a variety of nodes (such as bridges, LAN switches, routers, cross-connections and telephone switches) interconnected by a variety of links (such as cables, point-to-point radio connections and optical fibers). Some of the nodes include ports, for attaching external devices (referred to as end-points or hosts) such as computers, terminals, handsets, and multiplexers. A major concern is to supervise connectivity between two end points in such networks, especially when it comes to identifying a faulty node or link upon connectivity failure between the two end points.

U.S. Patent No. 5,477,531 discloses dedicated point-to-point testing equipment, which typically requires two users to coordinate their operations in order to identify a misbehaving component of the network. This solution becomes time consuming and expensive for testing relatively large network, where the testing equipment must be moved between many ports of the network.

Furthermore, this type of end-to-end test by itself provides no further information as to the source and location of the problem within the network.

There are other solutions intended for IP-based networks, such as the Distributed Ethernet IP Test-head **QT-600** provided by JDSU (see www.jdsu.com), which depend for their operation on the information provided within an IP-based network layer representing layer 3 in Open System Interconnection (OSI) model, and is therefore not applicable to data networks operating at the lower OSI layers, such as Ethernet Virtual Local area Networks (VLAN), which operate up to layer 2.5 of the OSI model. For an overview of Ethernet and the OSI model, see "Fundamentals of Ethernet" by Todd Rapposelli (Acterna, August 2005), available at www.jdsu.com.

IEEE standards 802.1ah and 802.1ag for Ethernet define Operation and Maintenance (OAM) procedures for Ethernet, networks. Similarly ITU standard 1.610 defines OAM procedures for ATM networks. These standard, however, rely on compliance of various network elements to the respective standard, and would not therefore be generally applicable when the data network is comprised of more than one different type of network segments, some of which may not be fully compliant to either one of these standards.

Various automated information-gathering methods for tracing network connection have been also proposed (e.g., see WO 03/028291 and/or Y. Yasuda et al. "Automated Network Connection Tracing and Data Gathering Methods in the SDH Network", IEEE Transactions on Communications, Vol. 42, p 1065, 1994). According to one embodiment, information gathering in these automated processes is accomplished by incorporating information that characterizes each node into a transmitted message/frame such that a chain of gathered information is provided. Unfortunately since this chain of gathered information can be relatively large a large transmission capacity typically is required. In addition, if the chain of gathered information is collected in the frame overhead, problems will be anticipated when the data network is comprised of more than one different type of network segment.

The proposed solution offers a method to provide continuity monitoring and the route tracing to such network. In view of the limitations in the prior art reviewed above, there remains a clear need for an economical monitoring system to provide connectivity checking and trace routing for communication network operating below the OSI network layer, without requiring compliance of various component networks to a particular standard.

It is an object of the present invention to provide improved system and method for performing end-to-end connectivity tests and route tracing within a VLAN, independently of any network layer protocol.

### SUMMARY OF THE INVENTION

Accordingly, the present invention relates to operation and maintenance of Ethernet based Networks with connectivity checking and trace routing capability. The invention is particularly applicable to Ethernet based networks; more specifically on Ethernet networks built on VLAN switching. Te invention permits checking the continuity of Ethernet route end-to-end and by network segment, independently of the network equipment capabilities, by using special frames that are not necessarily defined by specific standards.

In a first aspect, the present invention there provides a monitoring system for a data network serving a plurality of end and intermediate points interconnected by a plurality of nodes, the system comprising a first test unit and at least one traffic monitor. The first test unit is for inserting a marker frame into the data network via a first point selected from the plurality of end and intermediate points. The marker frame comprises address of the first test unit and a predetermined marker sequence code. Optionally, the marker frame further comprises
- an optional marker indicator field being easily detectable by a detection process, to permit ignoring any detected marker frame and thereby avoid interference with the payload traffic a marker control field to enable a checking for, and discarding of any false positive detections; and
- marker time stamp indicating the time of initiating the marker frame.

The **traffic monitor is** for probing data traffic passing via a corresponding node from the of the plurality of nodes to detect arrival of the marker frame as recognized by the marker sequence code, and for using the first test unit address to forward to the first test unit a **tracing frame** comprising the node address where the marker frame is detected and a copy of the detected marker frame. In operation, the first test unit recognizes the tracing frame by the marker sequence code contained therein, and builds a list of every node where the marker frame is detected based on the respective node address obtained from the respective tracing frame.

Conveniently, monitoring system further comprises a management network used for transmitting the tracing frame from the at least one traffic monitor to the first test unit.

Typically, the data network is an Ethernet virtual local area network (VLAN), the marker frame has a format compatible with the Ethernet format, and the address of the first test unit is a MAC address.

Another feature of the present system is to perform a continuity check in having the monitoring system insert into the data network a beacon frame for transmission from the first point to a second point selected from the plurality of end and intermediate points. The beacon frame comprises addresses of the first test unit and a predetermined beacon sequence code, and an optional beacon time stamp to enable measurement of latency time delay by the first test unit. The second point is provided with a test loop for returning a response frame to the first test unit using the first unit address comprised in the beacon frame. The response frame comprises a copy of the beacon frame, and an optional response time stamp to enable the first test unit to measure the time required for the response frame to transit from the second point to the first point. The first test unit is operative to check for receipt of the response frame as recognized by the beacon sequence code, and to declare an error status upon failure to receive the response frame within a predetermined time span from inserting the beacon frame.

An alternative use of the present invention to perform a continuity check is by including in the monitoring system a second test unit associated with the second point, wherein the first test unit is operative to insert into the data network a beacon frame for transmission between the first point and a second point selected from the plurality of end and intermediate points, the beacon frame comprising a sequence number, and wherein the second test unit is operative to detect the beacon frame, and upon failure to receive the reflected beacon frame within a predetermined time span from inserting the beacon frame by the first test unit, declares an error status. Furthermore, a management network is used for transmitting to the second test unit, a notification of inserting the beacon frame by the first test unit.

Three alternative tapping techniques are disclosed for use in alternative embodiments of the present invention to establish communication between each traffic monitor and the corresponding node. A first tapping technique is implemented by adding a probe the data network in order to route the marker frame to the first test unit, wherein the MAC address of the first test unit is used by the data network to correctly route the tracing frame to the first test unit. A second tapping technique is implemented by configuring the data network in a managed Queue-in-Queue operation and adding a test VLAN to be monitored and routed to the first test unit. A third tapping technique is implemented by creating a parallel VLAN network connected to the first test unit and routed in a similar manner to the data network.

In a further aspect, the present invention there provides a method for monitoring a data network serving a plurality of intermediate and termination points interconnected by a plurality of nodes. This method comprising the steps of:
i) selecting a first point from the plurality of intermediate and termination points;
ii) inserting a marker frame into the network for transmission from the first point towards the second point, said marker frame comprising address of the first point and a predetermined marker sequence code;
iii) examining data traffic passing via at least one of the plurality of nodes to detect arrival of the marker frame as recognized by the marker sequence code;
iv) forwarding to the first point, using the first point address, a tracing frame comprising a copy of the detected marker frame and the address of each node where the marker frame is detected; and
v) recognizing the tracing frame by the marker sequence code comprised therein, and building a list of every node where the marker frame is detected based on the respective node address derived from the respective tracing frame.

Optionally, this method further comprises a connectivity check performed by the steps of:
vi) selecting a second point from the plurality of intermediate and termination points;
vii) inserting a beacon frame into the data network for transmission between the first and second points, the beacon frame comprising address of the first and second points and a predetermined beacon sequence code;
viii) checking at the second point for receipt of the beacon frame as recognized by the beacon sequence code.
ix) upon receipt of the beacon frame at the second point, returning a response frame to the first test unit using the first unit address, the response frame comprising a copy of the beacon frame; and
x) checking for receipt of the response frame at the first point as recognized by the beacon sequence code, and declaring an error status upon failure to receive the response frame within a predetermined time span from the step of inserting the beacon frame;

An alternative method for the connectivity check performed by the steps of:
vi) selecting a second point from the plurality of intermediate and termination points;
vii) inserting a beacon frame into the data network for transmission between the first and second points, the beacon frame comprising address of the first and second points and a predetermined beacon sequence code; and
viii) checking for receipt of the beacon frame at the second point, and declaring a continuity error status upon failure to receive the beacon frame at the second point.

The present invention offers several advantages over prior art solutions, including the following:
- Using indicators inserted within test frames to be sent via an Ethernet network to trace the path.
- Ability to use the same trace-routing and continuity check to trace or supervise different network segments. This is very valuable in situation where routes are not connected end-to-end but are in stand-by mode, ready to be put in service in case of trouble on the primary route.
- Using special packets/frame which are valid for the node inside the network, in order to follow the tested circuit but can be voluntary irrelevant/invalid for the end point in order to be discarded or looped at the end of the circuit without interfering with the payload traffic.
- Only a negligible traffic load being created by the additional test traffic.
- Flexibility in implementing the invention under the form of external test resources, internal module or cards in the node or firmware/software modules in the node.

### BRIEF DESCRIPTION OF THE DRAWINGS

The invention will be described in greater detail with reference to the accompanying drawings which represent exemplary embodiments thereof, in which same reference numerals designate similar parts throughout the figures thereof, wherein:

Figure **1** is schematic diagram of a conventional Ethernet data network in accordance with prior art;

Figure **2** illustrates a test system for monitoring a network segment of the Ethernet data network shown in Figure **1**, in accordance with an embodiment of the present invention.

Figure **3** illustrates the flow of beacon frames during a connectivity check in accordance with the embodiment illustrated in Figure **2**;

Figure **4** illustrates the flow of marker frames during a route tracing test in accordance with the embodiment illustrated in Figure **2**;

Figure **5** illustrates a first alternative tapping techniques for use in the embodiment illustrated in Figure **2**;

Figure **6** illustrates a network configuration for implementing the first alternative tapping techniques illustrated in Figure **5**;

Figure **7** illustrates another network configuration for implementing a second alternative tapping techniques;

Figure **8** illustrates yet another network configuration for implementing a third alternative tapping techniques; and

Figure **9** illustrates the contents of each one of the four test frame categories (beacon, response, marker, and tracing frames), generated in accordance with various embodiments of the present invention.

### DETAILED DESCRIPTION

Reference herein to any embodiment means that a particular feature, structure, or characteristic described in connection with the embodiment can be included in at least one embodiment of the invention. The appearances of the phrase "in one embodiment" in various places in the specification are not necessarily all referring to the same embodiment, nor are separate or alternative embodiments mutually exclusive of other embodiments.

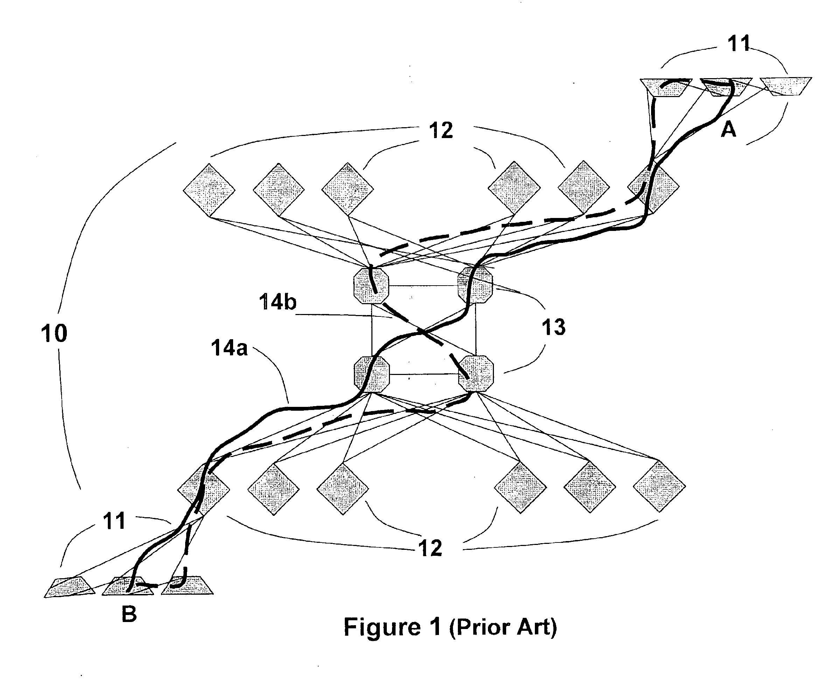

A conventional Ethernet data network **10** illustrated in Figure **1** typically includes thousands of service ports **11**, switchably interconnected via a multiplicity of network nodes including hundreds of metro (intermediate) nodes **12** and tens of core (central) nodes **13**. Each port **11** serves one or more end points, whereas each intermediate node **12** serves a cluster of ports **11** via dedicated links, and each intermediate node **12** is linked to more than one of the core node **13**, which are interconnected with one another. In this configuration, a connection between a first (originating) end point **A**, and a second (destination) end point **B** is established through the port **11** that serves the first end point **A**, then through at least one of the intermediate nodes **12** and one of the core nodes **13** and again through at least one of the other intermediate nodes **12**, and finally through the port **11** that serves the second end point **B.** As shown in Figure **1**, more than one alternative data routes **14a** and **14b** are available to connect the first and second end points **A** and **B**, depending on the availability of the nodes **12** and **13** and respective links to complete the required path.

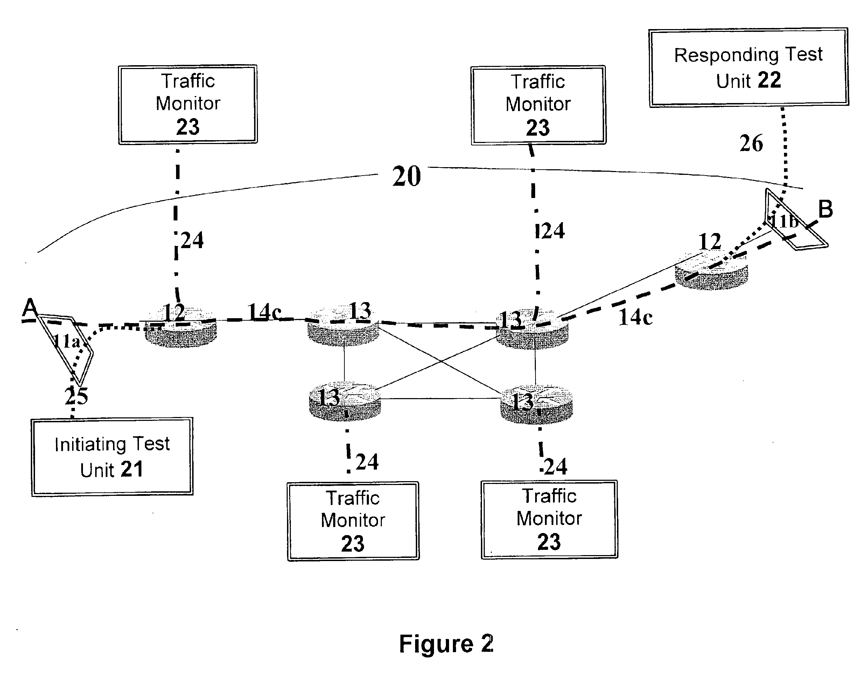

Figure **2** illustrates a monitoring system in accordance with an embodiment of the present invention for checking connectivity between the first and second end points **A** and **B** via a selected one of data routes **14c**, and for performing a route tracing test to find a routing error when such connectivity fails to be established between the two points **A** and **B**. The monitoring system, according to the present invention, is applied to a network segment **20** of the data network **10** (shown in Figure **1**). The monitoring system includes a first (initiating) test unit **21** in communication with a first port **11a** serving the first point **A** via a first tap **25,** at least one traffic monitor **23** in communication with at least one of the nodes **12** via one intermediate tap **24**, and a second (responding) test unit **22** in communication with a second port **11b** serving the second point **B** via a second tap **26.** Each of the first and second points **A** and **B** are selected from any of the end and intermediate points within the network segment **20** to be monitored. Each of the first and second test units **21** and **22** is referenced by a network address.

In this embodiment, the first test unit **21** provides test frames to the first tap **25**, for transmission between the first point **A** and the second point **B** through the first port **11a,** a series of nodes **12** and **13** along the data route **14**, and finally the second port **11b.** Each traffic monitor **23** then probes data traffic transiting through the respective node to detect arrival of the test frame, by using a respective intermediate tap **24**, while leaving the actual data unaffected.

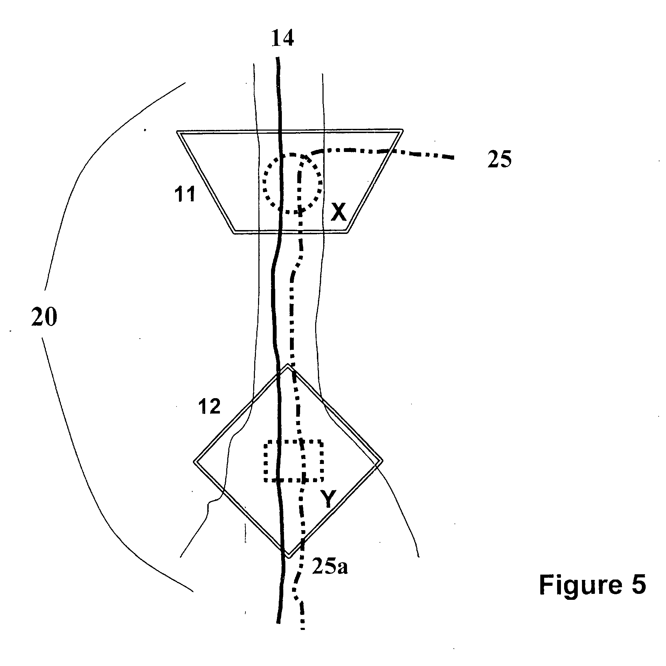

Each of the intermediate, first, and second taps **24**, **25** and **26** respectively is provided by a Virtual Local area Network (VLAN) probe using a predefined tapping technique to detect all data traffic passing via any interface of the corresponding network node and extract passing test frames for further reporting. In this embodiment, each VLAN probe contains one network interface and is associated with one network node. The tapping technique is optionally selected from one of the three alternative tapping techniques illustrated in Figures **5-8** and described further below.

### Connectivity Check

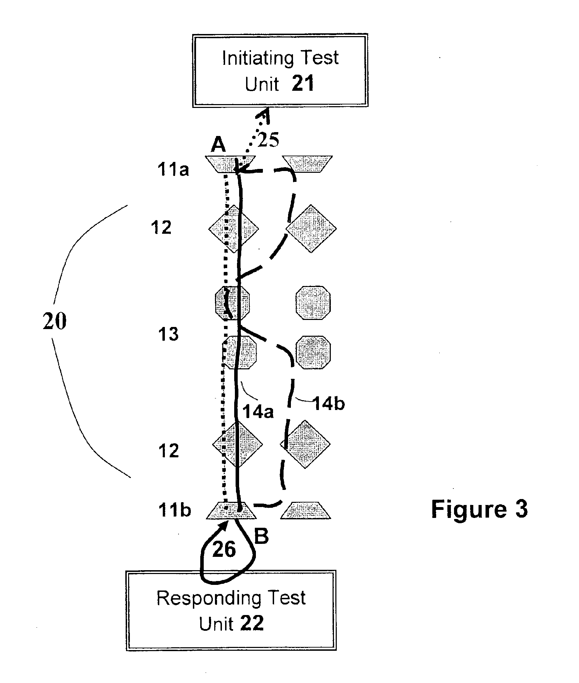

With reference to Figure **3**, the connectivity check is performed by having the first test unit **21** insert into the network segment **20**, through the first port **11a** serving the originating (first) point **A**, a test frame in the form of a beacon frame destined for transmission to the second point **B**. The test frame travels along one of the selected routes, e.g. 14a and 14b, through a series of intermediate and core nodes **12** and **13**. The second test unit **22** associated with the destination (second) point **B** provides a test loop **26** for returning a response frame to the first test unit **21**. This way, the first test unit **21** will have the knowledge whether or not the beacon frame has in fact reached the destination point **B**.

The first test unit 21 periodically monitors the first end point **A** at predetermined intervals (from a few seconds to a few hours) for receiving a response frame back from the second test unit **22**. Once received, the response frame is then extracted from the network using the same tap **25**. If no response frame is received within a predetermined time span, a connectivity error status is raised and reported to the Operational Support System (OSS) by the first test unit 21. A route tracing test is then triggered to localise the routing error.

### Route Tracing

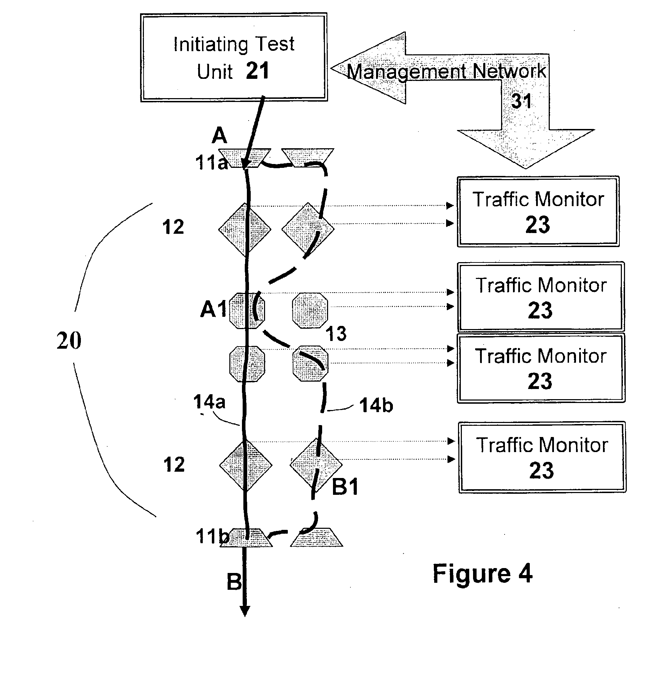

With reference to Figure **4**, the route tracing test is performed by having the first test unit **21** insert into the network segment **20**, through the first port **11a** serving the first point **A**, a test frame in the form of a marker frame destined for transmission to the second point **B**. Any detection of the marker frame at any intermediate node **12** and any core node **13** along the way, by a corresponding traffic monitor **23** is reported to the first test unit **21** for consolidation of the traversed data route illustrated here as being one of alternative data routes **14a** and **14b**. In the traffic monitor **23**, the full content of the marker frame is copied and passed to a reporting module (not shown), which then sends a corresponding tracing frame to the initiating test unit 21 via a management network **31** set up for data collection. The tracing frame includes the copied marker frame plus the network address of the traffic monitor where the marker has been detected. After a predetermined waiting period, after which no more marker frame reports are reasonably expected, the first test unit **21** compiles a log of the route used by the marker frame.

It is to be noted that the above described embodiment is also applicable for performing the continuity check and route tracing test when a first intermediate point **A1** is selected as an originating point instead of the first end point **A**, and similarly when a second intermediate point **B1** is selected as a destination point instead of the second end point **B**, as shown in Figure 4.

### Tapping techniques

Disclosed herein are three alternative tapping techniques available for use in the main embodiment of the present invention illustrated in Figure **2**, in cases where the network segment **20** to be monitored is an Ethernet virtual local area network (VLAN). Ethernet equipment is designed to route Ethernet circuits. Ethernet circuits can support multipoint to multipoint operation and so an Ethernet circuit typically has multiple ends. The filtering at an end point is done by a logical address in the form of Media Access Control (MAC) address. Each one of the tapping techniques described below is to provide the first and second taps **24** and **25**, as well as the taps **26** within a network segment **20** for the active process of inserting and extracting any one of three categories of test frames, i.e. beacon, response, and marker frames. Active tapping applies to the insertion and extraction of test frames into and out of the network, whereas passive tapping applies to monitoring the passage of test frames as well as making a copy thereof for transmission to the initiating test unit.

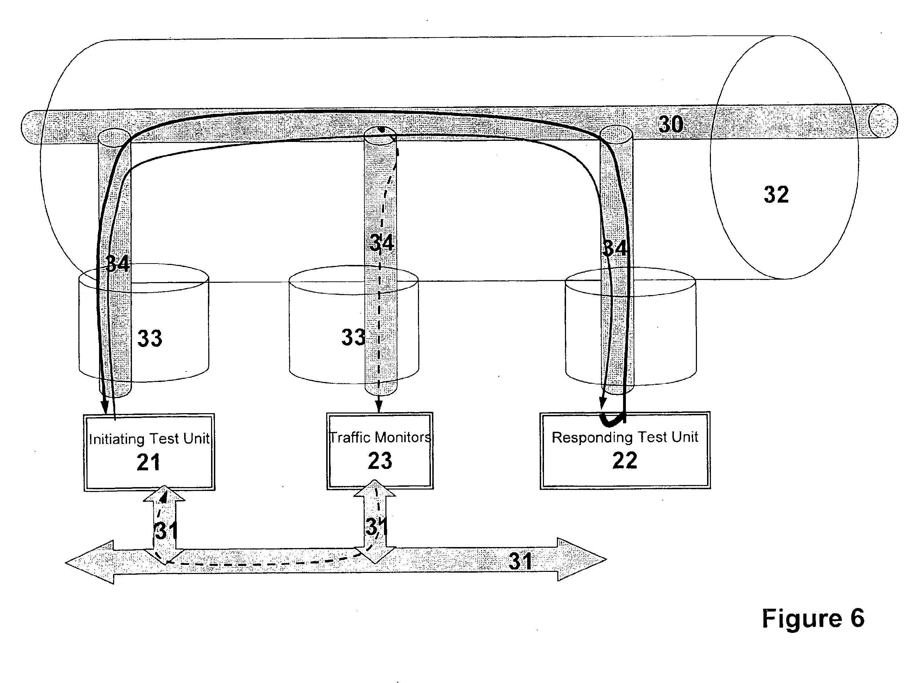

A first tapping technique, as illustrated in Figures **5**, is implemented in alternative embodiments of the present invention by configuring one of the ports **11** to join the existing VLAN segment **20** to be tapped. In this technique, active tapping is performed to insert test frames into the VLAN by using a provisioned VLAN circuit that merges into an existing circuit **X** in one of the ports **11**. Passive tapping is then performed by tracing the test frames inside the VLAN by configuring each one of the intermediate nodes **12** and core nodes (not shown) to replicate the test frames passing through a selected circuit **Y** therein and forwarding the replicated test frames towards the corresponding traffic monitor. The network configuration to achieve this process is illustrated in Figures **6**, wherein the VLAN segment **30** to be tested, which exists within an Ethernet network **32**, is configured to route the test frames from and to each of the first (initiating) test unit **21**, the second (responding) test unit **22**, and any one of the traffic monitors **23** via VLAN taps **34** taken within existing Ethernet taps **33.** In this configuration the VLAN segment **30** is used to transport both data traffic and the test frames. The MAC address of the initiating test unit 21 and the responding test unit 22 is used by the Ethernet network **32** to correctly route the test frames.

When performing the connectivity check, in embodiments implementing the first tapping technique, the test frames are exchanged between the initiating test unit **21** and the responding test unit **22** over the VLAN segment 30 through the taps **34.** The test frames take the form of beacon frames in the forward direction, and the form of response frame in the reverse direction. When performing, on the other hand, the route tracing test in such embodiments, test frames in the form of marker frame are transmitted from the initiating test unit **21** to the responding test unit **22,** through the taps **34** and via a tandem of nodes (not shown), where the passing test frames are detected by corresponding traffic monitors **23.** These traffic monitors **23** then route test frames, in the form of tracing frames, to the initiating test unit **21** over the management network **31** set up for data collection.

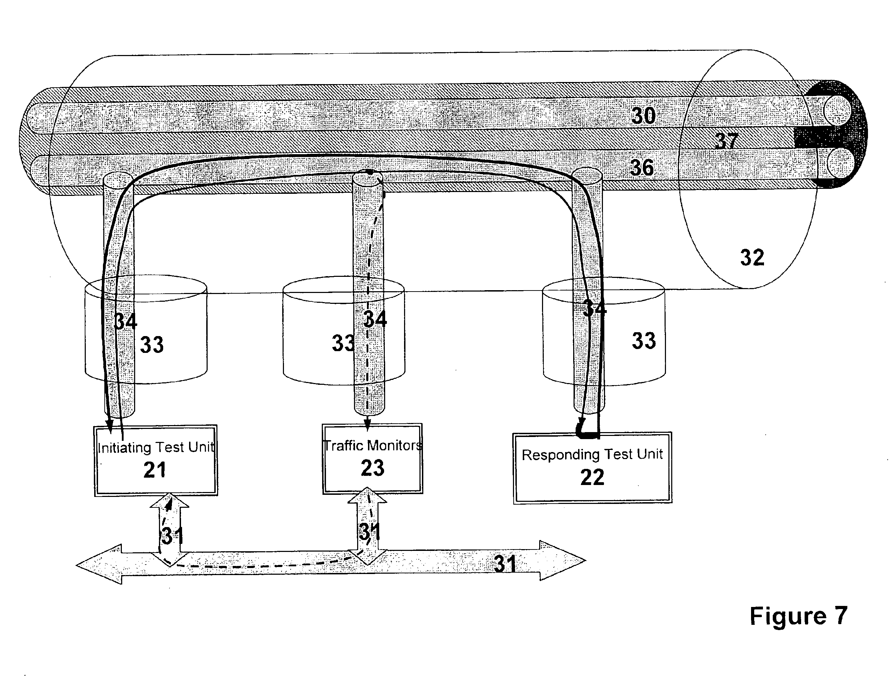

A second tapping technique, as illustrated in Figure **7****,** is implemented in embodiments using this technique, by configuring the VLAN segment **30** to be tapped, in a managed Queue-in-Queue operation. With the Queue-in-Queue operation, Ethernet circuits are stacked on top of one another by the addition of an overlay VLAN layer, which in turn can be stacked in another VLAN in a repetitive manner. In this way, a test VLAN **36** is added to the VLAN segment **30.** Both the VLAN segment **30** to be tested and the test VLAN **36** are transported within the same parent VLAN **37** within the Ethernet networks **32.** This network topology insures that both the VLAN segment **30** and the test VLAN **36** use exactly the same traffic route. The test VLAN **36** is configured to route test frames between the initiating test unit **21,** the responding test unit **22,** and any one of the traffic monitors **23** via a VLAN tap **34** taken within an existing Ethernet tap **33.** In this configuration the VLAN segment **30** is used to transport data traffic, whereas the test VLAN **36** is used to transport the test frames.

When performing the connectivity check, in embodiments implementing the second tapping technique, the test frames (in the form of beacon and response frames) are exchanged between the initiating test unit **21** and the responding test unit **22** over the provisional test VLAN **36** via the taps **34.** On the other hand, when performing the route tracing test in such embodiments, test frames in the form of marker frame are transmitted from the initiating test unit **21** to the responding test unit **22,** through the taps **34** and via a tandem of nodes (not shown) of the test VLAN **36,** wherein the passing test frames are detected by corresponding traffic monitors **23.** The traffic monitors **23** then route the test frames in the form of tracing frames to the initiating test unit **21** over the management network **31** set up for data collection.

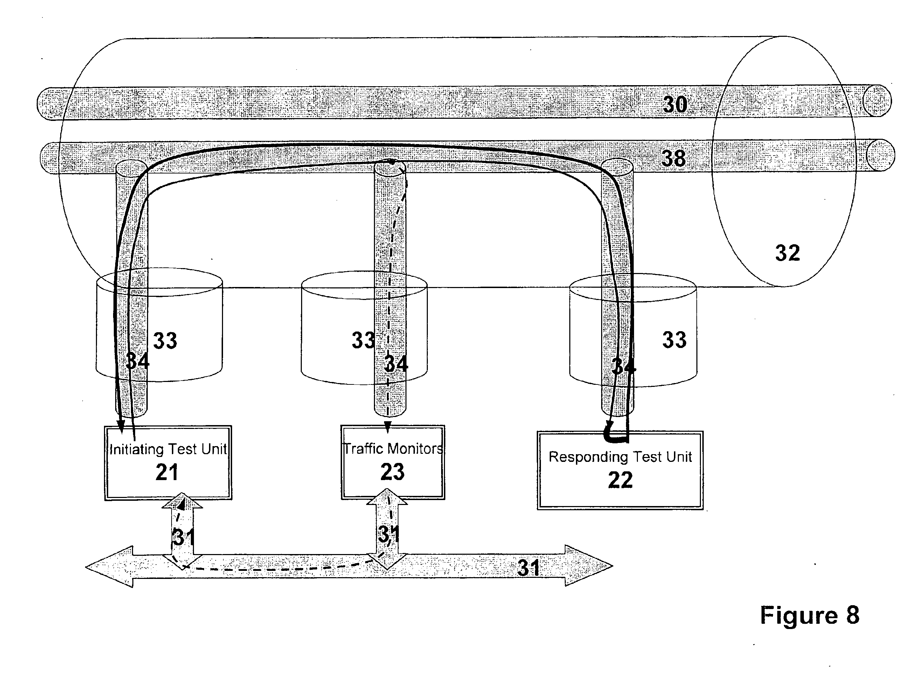

A third tapping technique, as illustrated in Figure **8****,** is implemented in embodiments using this technique, by using a dedicated parallel VLAN **38** which is configured to take exactly the same traffic route as the VLAN segment **30** to be tested. Instead of directly tapping into the VLAN segment **30,** the test frames are routed in the parallel VLAN **38** along the same path as that followed in the VLAN segment **30.** In this way, the parallel VLAN **38** is used to route test frames between the initiating test unit **21,** the responding test unit **22** and any one of the traffic monitors **23** via a VLAN tap **34** taken within an existing Ethernet tap **33.** In this configuration the VLAN segment **30** is used to transport data traffic whereas the parallel VLAN **38** is used to transport the test frames. In order to allow for monitoring multiple routes from a single interface, several taps are optionally created with the third tapping technique and routed to the port (physical or logical) serving the traffic monitor.

When performing the connectivity check, in embodiments implementing the third tapping technique, the test frames (in the form of beacon and response frames) are exchanged between the initiating test unit **21** and the responding test unit **22** over the provisional parallel VLAN **38** via the taps **34.** When performing, on the other hand, the route tracing test in such embodiments, test frames in the form of marker frame are transmitted from the initiating test unit **21** to the responding test unit **22,** through the taps **34** and via a tandem of nodes (not shown) of the parallel VLAN **38,** wherein the passing test frames are detected by corresponding traffic monitors **23.** The traffic monitors **23** then route test frames, in the form of tracing frames, to the initiating test unit **21** over the management network **31** set up for data collection.

Monitoring and testing of a multiple VLAN from a single interface is implemented in alternative embodiments by creating a multiple tap using any one of the first, second and third tapping technique on a single physical interface.

### Test Frame Structures

There are three alternative formats for the four test frame categories (beacon, response, marker and tracing frames) in accordance with various embodiments of the present invention, as follows.
A) In one embodiment, the test frame structure respects the Ethernet format, which allows the test frame to be any one of point-to-point, multicast and broadcast frames. The test frame is embedded within the payload section of a standard Ethernet network to be sent as a simple Ethernet frame. Addressing of test frames exchanged between the initiating entity and responding entities is achieved by the use of the regular Ethernet addressing technique, i.e. MAC Address. This eliminates the need for adding extra Ethernet source and destination addressing fields in the test frame format.
B) In an alternative embodiment, the test frame is embedded within the payload section of a VLAN (802.1q) frame to be sent as a VLAN frame.
C) In an embodiment implementing the second tapping technique mentioned above, the **test** frame is sent in a "queued in queue" frame, i.e. VLAN in a VLAN configuration.

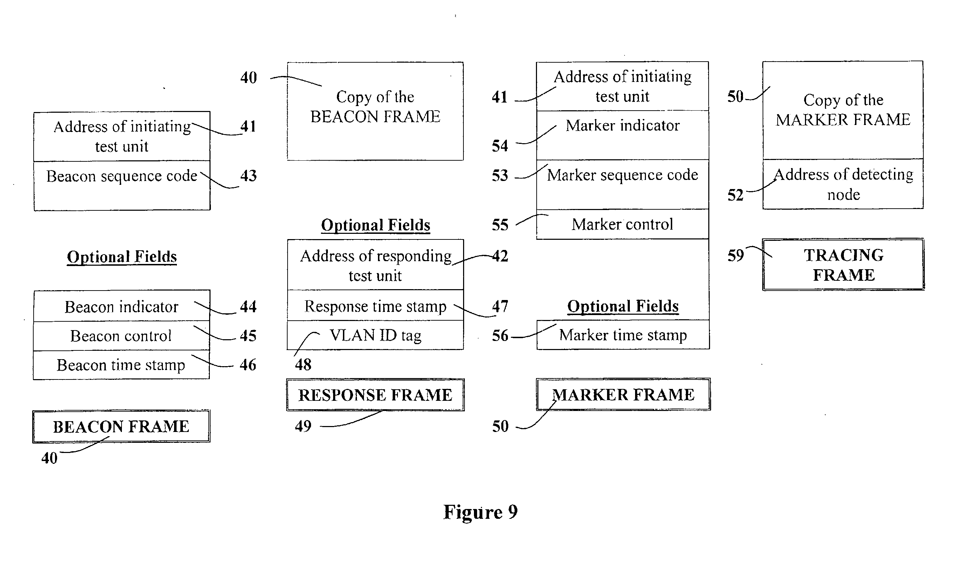

Illustrated in Figure **9** are the contents of each one of the four test frame categories, as described below. Such contents are optionally coded in accordance with any one of the above three formats.

A beacon frame **40** includes a predetermined beacon sequence code **43** plus originating IP address **41** of the management network interface of the initiating test unit **21** (shown in Figure **2**) to permit return of response frames via the management network **31** (shown in Figure **4**). Optionally the beacon frame **40** further includes any one of other fields such as a beacon indicator field **44,** a beacon control field **45,** and a beacon time stamp **46** indicating the time of initiating the beacon frame, to enable the first test unit **21** (shown in Figure **2**) to measure latency time delay between inserting the beacon frame into the data network and receiving back the corresponding response frame.

In return, a response frame **49** includes, as shown in Figure **9****,** a copy of the received beacon frame **40.** In addition, the response frame **49** optionally includes any one of:
- a response time stamp **47** indicating the time of generating the response frame **49,** to enable the first test unit to measure the time required for the response frame **49** to transit from the second point to the first point;
- an identification (ID) tag **48** of the VLAN in which the beacon frame was received, such ID tag to be repeated when a queue in queue mode to allow one VLAN to be coded within another VLAN; and
- a destination IP address **42** of the management network interface of the responding test unit **22** (shown in Figure **2****).**

A marker frame **50,** as shown in Figure **9****,** includes the address of the initiating test unit **41,** a marker control field **55,** and a marker sequence code **53.** Optionally the marker frame **50** further includes any one of additional fields such as a marker time stamp **56** to indicate the time of initiating the marker frame **50,** in order to enable measurement of latency time delay, by the imitating test unit.

In return, a tracing frame **59** includes, as shown in Figure **9****,** a copy of the detected marker frame **50** and the node address **52** where the marker frame **50** has been detected.

Examples of the addresses **41, 42** and **52** include IP address, MAC address, and any other location reference.

The beacon and marker sequence codes **43** and **53,** respectively, identify the beacon frame **40** and marker frame **50** to the first and second test units **21** and **22** and any of the traffic monitors **23** (shown in Figure **2**), in order to enable an easy detection of the loss of either of these two frames. One way to generate these sequence codes is by following a predetermined alphanumeric order. Another way is random coding.

The beacon and marker indicator fields **44** and **54** are specifically coded to be easily detectable by a simple, but relatively fast, detection process located at any one of the initiating and responding test units **21** and **22** and the traffic monitors **23** (shown in Figure **2**) within the network typically required for a large flow of data. Upon detection of any one of the beacon indicator field **44** and marker indicator field **54,** the detection process acts to ignore the originating address **41** and the destination address **42** and any other Ethernet fields to avoid their interfering with the payload traffic, thereby minimizing the additional data traffic resulting from inserting the test frames in order to save processing time. Otherwise, if any of the beacon indicator field **44** and marker indicator field **54** is absent, every beacon and marker frame detected by the detection process will trigger a response.

The beacon control field **45** and the marker control field **55** enable checking for, and discarding of, false positive detections likely to be created by the fast detection process. Optionally any one of these two fields further includes extra control bytes on the source and destination MAC addresses and other Ethernet fields, to enable completion of the false positive detections.

In particular implementations, the test frame fields described above are coded as follows:
- The IP addresses of the initiating and responding units **41** and **42** respectively are passed in ASCII format. Differentiation between IPV4 and IPV6 addresses is done by the text representation.
- Each of the beacon sequence code **43** and marker sequence code **53** is formatted in text as a 4 digits number, where 0000 indicates a cold start. After a 9999 sequence code is reached, the system restarts at 0001.
- Each of the beacon marker indicator field **44** and marker indicator field **54** is coded in binary in the form of the 64 bits hexadecimal representation of "7F AA 7F 55 FF 55 00 AA".
- Each of the beacon control field **45** and marker control field **55** is coded as the MD5 checksum of the overall Ethernet payload and is coded in 128 bits.
- Each of the beacon, response, and marker time stamps **46, 47** and **56,** respectively, is passed in text as AAAAMMJJ-HH:MM:SS:[mmm]
- The VLAN ID tag **48** is coded in text as a 5 digit number.

The first test unit recognizes the tracing frame by the marker sequence code contained therein, and builds a sequential list of every node where the marker frame is detected based on the respective node address obtained from the respective tracing frame.

### Alternative Embodiments

The above-described embodiments are intended to be examples of the present invention. Numerous variations, modifications, and adaptations, such as those mentioned below, may be made to the particular embodiments by those of skill in the art, without departing from the spirit and scope of the invention, which are defined solely by the claims appended hereto.

Some probes may have more than one network interfaces and are therefore capable of tapping into more than one network node, instead of one network interface per probe used in the main embodiment. Possible probe implementations include internal software probes, and internal and external hardware probes.

Instead of using the test loop **26** shown in Figure **3****,** the connectivity check is optionally performed by having each of the first and second test units **21** and **22** insert into the network segment **20** a separate beacon frame destined to the other test unit, and accordingly inform the other test unit of such action using the management network **31.** Then each test unit periodically monitors the corresponding end point thereof for receiving a beacon frame from the other test unit. In other words, both forward and return directions between the fist and second end points **A** and **B** are monitored independently. In this embodiment, the management network **31** (shown in Figure **4**) is used by the two test units as return path to inform each other of the insertion and/or reception of the beacon frame.

The fast detection process mentioned above within the initiating and responding test units **21** and **22** and traffic monitors **23** (all shown in Figure **2**) and the traffic monitors **23** (shown in Figure **2**) is implemented either in hardware or in software. Alternative hardware implementations include field programmable gate arrays (FPGA), application-specific integrated circuits (ASIC), and Digital Signal Processor (DSP). The traffic monitors **23** may be implemented as external test resources, internal modules or cards, or firmware/software modules, in any of the nodes **12** and **13.**

Some networks, in their core part, derive from standardized Ethernet frames to add some proprietary facilities. In such case the frame may deviate from Ethernet frame format, by using special non-standardized frames.

As an alternative to the coding scheme given above for the main embodiment, the fields within the test frames may be coded in XML.

## Claims

1. A monitoring system for a data network (10) serving a plurality of end and intermediate points interconnected by a plurality of nodes (12, 13), the system comprising:
a) a first test unit (21) for inserting a marker frame, comprising an address of the first test unit and a marker sequence code, into the data network via a first point selected from the plurality of end and intermediate points;
b) at least one traffic monitor (23), each traffic monitor connected to one of the plurality of nodes for probing data traffic passing therethrough to detect arrival of the marker frame as recognized by the marker sequence code, and for forwarding a tracing frame comprising the node address where the marker frame is detected and a copy of the detected marker frame, to the first test unit using the first test unit address,
wherein, in operation, the first test unit (21) recognizes the tracing frame by the marker sequence code contained therein, and builds a list of every node in which the marker frame is detected based on each node address obtained from each tracing frame.

2. The monitoring system of claim 1, further comprising a management network for transmitting the tracing frame from the at least one traffic monitor to the first test unit.

3. The monitoring system of claim 1, wherein the data network is an Ethernet virtual local area network (VLAN), wherein the marker frame has a format compatible with the Ethernet format, and wherein the address of the first test unit is a MAC address.

4. The monitoring system of claim 1,
wherein the first test unit is operative to insert into the data network a beacon frame for transmission from the first point to a second point, selected from the plurality of end and intermediate points, the beacon frame comprising the address of the first test unit and a predetermined beacon sequence code;
wherein the second point is provided with a test loop for returning a response frame to the first test unit using the first unit address comprised in the beacon frame, the response frame comprising a copy of the beacon frame; and
wherein the first test unit is operative to check for receipt of the response frame as recognized by the beacon sequence code, and to declare an error status upon failure to receive the response frame within a predetermined time span from inserting the beacon frame.

5. The monitoring system of claim 4, wherein the beacon frame further comprises a beacon time stamp to enable measurement of latency time delay by the first test unit.

6. The monitoring system of claim 4, wherein the response frame further comprises a response time stamp to enable the first test unit to measure the time required for the response frame to transit from the second point to the first point.

7. The monitoring system of claim 1, further comprising a second test unit associated with the second point,
wherein the first test unit is operative to insert into the data network a beacon frame for transmission between the first point and a second point selected from the plurality of end and intermediate points, the beacon frame comprising a sequence number, and
wherein the second test unit is operative to detect the beacon frame, and to declare an error status upon failure to receive the beacon frame from the first test unit within a predetermined time span.

8. The monitoring system of claim 7, further comprising a management network used for transmitting a notification to the second test unit that the first test unit inserted the beacon frame.

9. The monitoring system of claim 3, further comprising a VLAN probe between each traffic monitor and the corresponding node, for routing the marker frame and the tracing frame between the each traffic monitor and the first test unit, wherein the MAC address of the first test unit is used by the data network to correctly route the tracing frame to the first test unit.

10. The monitoring system of claim 3, further comprising a test VLAN being monitored and routed to the first test unit, for routing the marker frame and the tracing frame between the each traffic monitor and the first test unit, wherein the test VLAN is added by configuring the data network in a managed Queue-in-Queue operation.

11. The monitoring system of claim 3, further comprising a parallel VLAN connected to the first test unit and routed in a similar manner to the data network, for routing the marker frame and the tracing frame between each traffic monitor and the first test unit.

12. The monitoring system of claim 1, wherein the marker frame further comprises a marker indicator field for being detected by a detection process, to permit ignoring any detected marker frame and thereby avoid interference with the payload traffic.

13. The monitoring system of claim 12, wherein the marker frame further comprises a marker control field to enable a checking for, and discarding of any false positive detections.

14. The monitoring system of claim 1, wherein the marker frame further comprises a marker time stamp indicating the time of initiating the marker frame.

15. A method for monitoring a data network (10) serving a plurality of intermediate and termination points interconnected by a plurality of nodes (12,13), the method comprising the steps of:
i) selecting a first point from the plurality of intermediate and termination points;
ii) inserting a marker frame into the network for transmission from the first point towards a second point, said marker frame comprising an address of the first point and a predetermined marker sequence code;
iii) examining data traffic passing via at least one of the plurality of nodes to detect arrival of the marker frame as recognized by the marker sequence code;
iv) forwarding to the first point, using the first point address, a tracing frame comprising a copy of the detected marker frame and the address of each node where the marker frame is detected; and
v) recognizing the tracing frame by the marker sequence code comprised therein, and building a list of every node where the marker frame is detected based on the respective node address derived from the respective tracing frame.

16. The method of claim 15, wherein the data network is an Ethernet virtual local area network (VLAN), the marker frame has a format compatible with the Ethernet format, and the address of the first test unit is a MAC address.

17. The method of claim 15 further comprising a connectivity check performed by the steps of:
vi) selecting a second point from the plurality of intermediate and termination points;
vii) inserting a beacon frame into the data network for transmission between the first and second points, the beacon frame comprising address of the first and second points and a predetermined beacon sequence code;
viii) Checking at the second point for receipt of the beacon frame as recognized by the beacon sequence code.
ix) upon receipt of the beacon frame at the second point, returning a response frame to the first test unit using the first unit address, the response frame comprising a copy of the beacon frame; and
x) checking for receipt of the response frame at the first point as recognized by the beacon sequence code, and declaring an error status upon failure to receive the response frame within a predetermined time span.

18. The method of claim 17, wherein the beacon frame further comprises a beacon time stamp to enable measurement of latency time delay by the first test unit.

19. The method of claim 15, further comprising a connectivity check performed by the steps of:
vi) selecting a second point from the plurality of intermediate and termination points;
vii) inserting a beacon frame into the data network for transmission between the first and second points, the beacon frame comprising addresses of the first and second points and a predetermined beacon sequence code; and
viii) checking for receipt of the beacon frame at the second point, and declaring a continuity error status upon failure to receive the beacon frame at the second point.

## Patentansprüche

1. Überwachungssystem für ein Datennetzwerk (10), welches eine Mehrzahl von End- und Zwischenpunkten bedient, die durch eine Mehrzahl von Knoten (12, 13) untereinander verbunden sind, wobei das System umfasst:
a) eine erste Testeinheit (21) zum Einfügen eines Markierungsframes, das eine Adresse der ersten Testeinheit und einen Markierungssequenzcode umfasst, über einen aus der Mehrzahl von End- und Zwischenpunkten ausgewählten ersten Punkt in das Datennetzwerk;
b) wenigstens einen Verkehrsmonitor (23), wobei jeder Verkehrsmonitor zum Testen von durch ihn hindurchgehenden Datenverkehr, um die Ankunft des Markierungsframes **dadurch** zu erfassen, dass der Markierungssequenzcode erkannt wird, und zum Weiterleiten eines Verfolgungsframes, das die Knotenadresse, an der das Markierungsframe erfasst wird, und eine Kopie des erfassten Markierungsframes umfasst, an die erste Testeinheit mittels der Adresse der ersten Testeinheit mit einem aus der Mehrzahl von Knoten verbunden ist,
wobei die erste Testeinheit (21) im Betrieb das Verfolgungsframe durch den darin enthaltenen Markierungssequenzcode erkennt und eine Liste von jedem Knoten, in welchem das Markierungsframe erfasst ist, basierend auf jeder von jedem Verfolgungsframe erhaltenen Knotenadresse ersteift.

2. Überwachungssystem nach Anspruch 1, ferner umfassend ein Verwaltungsnetzwerk zum Übertragen des Verfolgungsframes von dem wenigstens einen Verkehrsmonitor an die erste Testeinheit.

3. Überwachungssystem nach Anspruch 1, wobei das Datennetzwerk ein Ethernet-basiertes Virtual Local Area Network (VLAN) ist, wobei das Markierungsframe ein mit dem Ethernetformat kompatibles Format aufweist und wobei die Adresse der ersten Testeinheit eine MAC-Adresse ist.

4. Überwachungssystem nach Anspruch 1, wobei die erste Testeinheit dazu betriebsfähig ist, ein Beaconframe zur Übertragung von dem ersten Punkt an einen zweiten Punkt, der aus der Mehrzahl von End- und Zwischenpunkten ausgewählt ist, in das Datennetzwerk einzufügen, wobei das Beaconframe die Adresse der ersten Testeinheit und einen vorbestimmten Beaconsequenzcode umfasst;
wobei der zweite Knoten mit einer Testschleife zum Zurückgeben eines Antwortframes an die erste Testeinheit mittels der in dem Beaconframe enthaltenen Adresse der ersten Einheit versehen ist, wobei das Antwortframe eine Kopie des Beaconframes umfasst; und
wobei die erste Testeinheit dazu betriebsfähig ist, den Empfang des Antwortframes **dadurch** zu überprüfen, dass der Beaconsequenzcode erkannt wird, und einen Fehlerstatus bei einem Fehler zum Empfangen des Antwortframes innerhalb einer vorbestimmten Zeitspanne vom Einfügen des Beaconframes anzugeben.

5. Überwachungssystem nach Anspruch 4, wobei das Beaconframe ferner einen Beaconzeitstempel umfasst, um eine Latenzzeitverzögerungsmessung durch die erste Testeinheit zu ermöglichen.

6. Überwachungssystem nach Anspruch 4, wobei das Antwortframe ferner einen Antwortzeitstempef umfasst, um der ersten Testeinheit zu ermöglichen, die Zeit zu messen, die benötigt wurde, um das Anwortframe von dem zweiten Punkt an den ersten Punkt zu übertragen.

7. Überwachungssystem nach Anspruch 1, ferner umfassend eine dem zweiten Punkt zugehörige zweite Testeinheit,
wobei die erste Testeinheit dazu betriebsfähig ist, ein Beaconframe zur Übertragung zwischen dem ersten Punkt und einem aus der Mehrzahl von End- und Zwischenpunkten ausgewählten zweiten Punkt in das Datennetzwerk einzufügen, wobei das Beaconframe eine Sequenznummer umfasst, und
wobei die zweite Testeinheit dazu betriebsfähig ist, das Beaconframe zu erfassen und einen Fehlerstatus bei einem Fehler zum Empfangen des Beaconframes von der ersten Testeinheit innerhalb einer vorbestimmten Zeitspanne anzugeben.

8. Überwachungssystem nach Anspruch 7, ferner umfassend ein Verwaltungsnetzwerk, welches zum Übertragen einer Benachrichtigung an die zweite Testeinheit verwendet wird, dass die erste Testeinheit das Beaconframe eingefügt hat.

9. Überwachungssystem nach Anspruch 3, ferner umfassend einen VLAN-Tester, der zwischen jedem Verkehrsmonitor und dem entsprechenden Knoten ist, zum Routen des Markierungsframes und des Verfolgungsframes zwischen jedem Verkehrsmonitor und der ersten Testeinheit, wobei die MAC-Adresse der ersten Testeinheit durch das Datennetzwerk verwendet wird, um das Verfolgungsframe richtig an die erste Testeinheit zu routen.

10. Überwachungssystem nach Anspruch 3, ferner umfassend ein Test-VLAN, das überwacht und an die erste Testeinheit geroutet ist, zum Routen des Markierungsframes und des Verfolgungsframes zwischen jedem Verkehrsmonitor und der ersten Testeinheit, wobei das Test-VLAN durch Konfigurieren des Datennetzwerkes in einem verwalteten Queue-in-Queue-Betrieb hinzugefügt wird.

11. Überwachungssystem nach Anspruch 3, ferner umfassend ein paralleles VLAN, welches mit der ersten Testeinheit verbunden und auf eine ähnliche Weise an das Datennetzwerk geroutet ist, zum Routen des Markierungsframes und des Verfolgungsframes zwischen jedem Verkehrsmonitor und der ersten Testeinheit.

12. Überwachungssystem nach Anspruch 1, wobei das Markierungsframe ferner ein Markierungsindikatorfeld zum Erfasstwerden durch einen Erfassungsprozess umfasst, um Ignorieren von beliebigen erfassten Markierungsframes zu ermöglichen und dabei Interferenz mit dem Nutzlast-Datenverkehr zu verhindern.

13. Überwachungssystem nach Anspruch 12, wobei das Markierungsframe ferner ein Markierungskontrollfeld umfasst, um eine Überprüfung auf und Verwerfung von beliebigen fehlerhaften Positiverfassungen zu ermöglichen.

14. Überwachungssystem nach Anspruch 1, wobei das Markierungsframe ferner einen Markierungszeitstempel umfasst, der die Auslösungszeit des Markierungsframes anzeigt.

15. Verfahren zum Überwachen eines Datennetzwerkes (10), das eine Mehrzahl von Zwischen- und Endpunkten bedient, die durch eine Mehrzahl von Knoten (12, 13) untereinander verbunden sind, wobei das Verfahren die Schritte umfasst:
i) Auswählen eines ersten Punktes aus der Mehrzahl von Zwischen- und Endpunkten;
ii) Einfügen eines Markierungsframes in das Netzwerk zur Übertragung von dem ersten Punkt in Richtung eines zweiten Punktes, wobei das Markierungsframe eine Adresse des ersten Punktes und einen vorbestimmten Markierungssequenzcode umfasst;
iii) Prüfen des Datenverkehrs, der durch wenigstens einen von der Mehrzahl von Knoten hindurchgeht, um die Ankunft des Markierungsframes **dadurch** zu erfassen, dass der Markierungssequenzcode erkannt wird;
iv) Weiterleiten eines Verfolgungsframes, das eine Kopie des erfassten Markierungsframes und der Adresse von jedem Knoten umfasst, an dem das Markierungsframe erfasst wird, an den ersten Punkt mittels der Adresse des ersten Punktes; und
v) Erkennen des Verfolgungsframes durch den darin enthaltenen Markierungsseguenzcode und Erstellen einer Liste von jedem Knoten, an dem das Markierungsframe erfasst wird, basierend auf der jeweiligen aus dem jeweiligen Verfolgungsframe abgeleiteten Knotenadresse.

16. Verfahren nach Anspruch 15, wobei das Datennetzwerk ein Ethernet-basiertes Virtual Local Area Network (VLAN) ist, wobei das Markierungsframe ein mit dem Ethernetfarmat kompatibles Format aufweist und die Adresse der ersten Testeinheit eine MAC-Adresse ist.

17. Verfahren nach Anspruch 15, ferner umfassend eine Konnektivitätsüberprüfung, die durch die Schritte durchgeführt wird:
vi) Auswählen eines zweiten Punktes aus der Mehrzahl von Zwischen- und Endpunkten;
vii) Einfügen eines Beaconframes zur Übertragung zwischen dem ersten und dem zweiten Punkt in das Datennetzwerk, wobei das Beaconframe eine Adresse des ersten und des zweiten Punktes und einen vorbestimmten Beaconsequenzcode umfasst;
viii) Überprüfen auf Empfang des Beaconframes an dem zweiten Punkt **dadurch**, dass der Beaconsequenzcode erkannt wird,
ix) Zurückgeben eines Antwortframes an die erste Testeinheit mittels der Adresse der ersten Testeinheit bei Empfang des Beaconframes an dem zweiten Punkt, wobei das Antwortframe eine Kopie des Beaconframes umfasst; und
x) Überprüfen auf Empfang des Antwortframes an dem ersten Punkt **dadurch**, dass der Beaconsequenzcode erkannt wird, und Angeben eines Fehlerstatus bei einem Fehler zum Empfangen des Antwortframes innerhalb einer vorbestimmten Zeitspanne.

18. Verfahren nach Anspruch 17, wobei das Beaconframe ferner einen Beaconzeitstempel umfasst, um eine Latenzzeitverzögerungsmessung durch die erste Testeinheit zu ermöglichen.

19. Verfahren nach Anspruch 15, ferner umfassend eine Konnektivitätsüberprüfng, die durch die Schritte durchgeführt wird:
vi) Auswählen eines zweiten Punktes aus der Mehrzahl von Zwischert- und Endpunkten;
vii) Einfügen eines Beaconframes zur Übertragung zwischen dem ersten und dem zweiten Knoten in das Datennetzwerk, wobei das Beaconframe die Adressen des ersten und des zweiten Punktes und einen vorbestimmten Beaconsequenzcode umfasst; und
viii) Überprüfen auf Empfang des Beaconframes an dem zweiten Punkt und Angeben eines Kontinuitätsfehlerstatus bei einem Fehler zum Empfang des Beaconframes an dem zweiten Punkt.

## Revendications

1. Système de surveillance pour un réseau de données (10) desservant une pluralité de points d'extrémité et intermédiaires interconnectés par une pluralité de noeuds (12, 13), le système comprenant :
a) une première unité de test (21) pour insérer une trame de marqueur, comprenant une adresse de la première unité de test et un code de séquence de marqueur, dans le réseau de données par l'intermédiaire d'un premier point sélectionné parmi la pluralité de points d'extrémité et intermédiaires ;
b) au moins un dispositif de surveillance de trafic (23), chaque dispositif de surveillance de trafic connecté à un de la pluralité de noeuds pour sonder un trafic de données les traversant afin de détecter l'arrivée de la trame de marqueur comme reconnue par le code de séquence de marqueur, et pour transférer une trame de traçage comprenant l'adresse du noeud où la trame de marqueur est détectée et une copie de la trame de marqueur détectée, à la première unité de test en utilisant l'adresse de la première unité de test,
dans lequel, en opération, la première unité de test (21) reconnaît la trame de traçage par le code de séquence de marqueur contenu à l'intérieur, et constitue une liste de tous les noeuds dans lesquels la trame de marqueur est détectée sur la base de chaque adresse de noeud obtenue à partir de chaque trame de traçage.

2. Système de surveillance selon la revendication 1, comprenant en outre un réseau de gestion pour transmettre la trame de traçage du au moins un dispositif de surveillance de trafic à la première unité de test.

3. Système de surveillance selon la revendication 1, dans lequel le réseau de données est un réseau local virtuel (VLAN) Ethernet, dans lequel la trame de marqueur a un format compatible avec le format Ethernet, et dans lequel l'adresse de la première unité de test est une adresse MAC.

4. Système de surveillance selon la revendication 1,
dans lequel la première unité de test est opérationnelle pour insérer dans le réseau de données une trame de balise pour la transmission du premier point à un second point, sélectionné parmi la pluralité de points d'extrémité et intermédiaires, la trame de balise comprenant l'adresse de la première unité de test et un code de séquence de balise prédéterminé ;
dans lequel le second point est pourvu d'une boucle de test pour retourner une trame de réponse à la première unité de test en utilisant l'adresse de la première unité comprise dans la trame de balise, la trame de réponse comprenant une copie de la trame de balise ; et
dans lequel la première unité de test est opérationnelle pour vérifier la réception de la trame de réponse comme reconnue par le code de séquence de balise, et pour déclarer un état d'erreur lors de l'échec de la réception de la trame de réponse à l'intérieur d'une période de temps prédéterminée depuis l'insertion de la trame de balise.

5. Système de surveillance selon la revendication 4, dans lequel la trame de balise comprend en outre une estampille temporelle de balise pour permettre la mesure d'un délai de temps d'attente par la première unité de test.

6. Système de surveillance selon la revendication 4, dans lequel la trame de réponse comprend une estampille temporelle de réponse pour permettre à la première unité de test de mesurer le temps requis pour que la trame de réponse transite du second point au premier point.

7. Système de surveillance selon la revendication 1, comprenant en outre une seconde unité de test associée au second point,
dans lequel la première unité de test est opérationnelle pour insérer dans le réseau de données une trame de balise pour la transmission entre le premier point et un second point sélectionnés parmi la pluralité de points d'extrémité et intermédiaires, la trame de balise comprenant un numéro de séquence, et
dans lequel la seconde unité de test est opérationnelle pour détecter la trame de balise, et pour déclarer un état d'erreur lors de l'échec de la réception de la trame de balise en provenance de la première unité de test à l'intérieur d'une période de temps prédéterminée.

8. Système de surveillance selon la revendication 7, comprenant en outre un réseau de gestion utilisé pour transmettre une notification à la seconde unité de test selon laquelle la première unité de test a inséré la trame de balise.

9. Système de surveillance selon la revendication 3, comprenant en outre une sonde VLAN entre chaque dispositif de surveillance de trafic et le noeud correspondant, pour router la trame de marqueur et la trame de traçage entre le chaque dispositif de surveillance de trafic et la première unité de test, dans lequel l'adresse MAC de la première unité de test est utilisée par le réseau de données afin de router correctement la trame de traçage vers la première unité de test.

10. Système de surveillance selon la revendication 3, comprenant en outre un VLAN test qui est surveillé et routé vers la première unité de test, pour router la trame de marqueur et la trame de traçage entre le chaque dispositif de surveillance de trafic et la première unité de test, dans lequel le VLAN test est ajouté en configurant le réseau de données dans une opération File d'attente-dans-File d'attente gérée.

11. Système de surveillance selon la revendication 3, comprenant en outre un VLAN parallèle connecté à la première unité de test et routé de manière similaire vers le réseau de données, pour router la trame de marqueur et la trame de traçage entre chaque dispositif de surveillance de trafic et la première unité de test.

12. Système de surveillance selon la revendication 1, dans lequel la trame de marqueur comprend en outre un champ d'indicateur de marqueur pour être détecté par un processus de détection, afin de permettre d'ignorer toute trame de marqueur détectée et éviter ainsi l'interférence avec le trafic de charge utile.

13. Système de surveillance selon la revendication 12, dans lequel la trame de marqueur comprend en outre un champ de contrôle de marqueur pour permettre une vérification et un rejet de toutes détections de faux positifs.

14. Système de surveillance selon la revendication 1, dans lequel la trame de marqueur comprend en outre une estampille temporelle de marqueur indiquant le temps d'initiation de la trame de marqueur.

15. Procédé pour surveiller un réseau de données (10) desservant une pluralité de points intermédiaires et de terminaison interconnectés par une pluralité de noeuds (12, 13), le procédé comprenant les étapes consistant à :
i) sélectionner un premier point parmi la pluralité de points intermédiaires et de terminaison ;
ii) insérer une trame de marqueur dans le réseau pour la transmission depuis le premier point vers un second point, ladite trame de marqueur comprenant une adresse du premier point et un code de séquence de marqueur prédéterminé ;
iii) examiner un trafic de données passant par l'intermédiaire d'au moins un de la pluralité de noeuds afin de détecter l'arrivée de la trame de marqueur comme reconnue par le code de séquence de marqueur ;
iv) transférer au premier point, en utilisant l'adresse du premier point, une trame de traçage comprenant une copie de la trame de marqueur détectée et l'adresse de chaque noeud où la trame de marqueur est détectée ; et
v) reconnaître la trame de traçage par le code de séquence de marqueur compris à l'intérieur, et constituer une liste de tous les noeuds où la trame de marqueur est détectée sur la base de l'adresse de noeud respective dérivée de la trame de traçage respective.

16. Procédé selon la revendication 15, dans lequel le réseau de données est un réseau local virtuel (VLAN) Ethernet, la trame de marqueur a un format compatible avec le format Ethernet, et l'adresse de la première unité de test est une adresse MAC.

17. Procédé selon la revendication 15, comprenant en outre une vérification de connectivité effectuée par les étapes consistant à :
vi) sélectionner un second point parmi la pluralité de points intermédiaires et de terminaison ;
vii) insérer une trame de balise dans le réseau de données pour la transmission entre les premier et second points, la trame de balise comprenant l'adresse des premier et second points et un code de séquence de balise prédéterminé ;
viii) vérifier au niveau du second point la réception de la trame de balise comme reconnue par le code de séquence de balise ;
ix) lors de la réception de la trame de balise au niveau du second point, retourner une trame de réponse à la première unité de test en utilisant l'adresse de la première unité, la trame de réponse comprenant une copie de la trame de balise ; et
x) vérifier la réception de la trame de réponse au niveau du premier point comme reconnue par le code de séquence de balise, et déclarer un état d'erreur lors de l'échec de la réception de la trame de réponse à l'intérieur d'une période de temps prédéterminée.

18. Procédé selon la revendication 17, dans lequel la trame de balise comprend en outre une estampille temporelle de balise pour permettre la mesure d'un délai de temps d'attente par la première unité de test.

19. Procédé selon la revendication 15, comprenant en outre une vérification de connectivité effectuée par les étapes consistant à :
vi) sélectionner un second point parmi la pluralité de points intermédiaires et de terminaison ;
vii) insérer une trame de balise dans le réseau de données pour la transmission entre les premier et second points, la trame de balise comprenant les adresses des premier et second points et un code de séquence de balise prédéterminé ; et
viii) vérifier la réception de la trame de balise au niveau du second point, et déclarer un état d'erreur de continuité lors de l'échec de la réception de la trame de balise au niveau du second point.
